# EUROPÄISCHE PATENTSCHRIFT

(11) **EP 1 181 835 B1**
(45) Veröffentlichungstag und Bekanntmachung des Hinweises auf die Patenterteilung: **12.03.2003**
(21) Anmeldenummer: 99919016.8
(22) Anmeldetag: 14.05.1999
(51) Int. Cl.: H04Q 7/38

(54) **KOMMUNIKATIONSVERFAHREN UND GEEIGNETE VORRICHTUNG FÜR KOMMUNIKATIONSFORUMS**
COMMUNICATION METHOD AND SUITABLE DEVICE FOR CHAT ROOMS
PROCEDE DE COMMUNICATION ET DISPOSITIF APPROPRIE DESTINE A UN FORUM DE COMMUNICATION

(43) Veröffentlichungstag der Anmeldung: 27.02.2002
(73) Patentinhaber: Swisscom Mobile AG, 3050 Bern (CH)
(72) Erfinder: LOHER, Urs, CH-3072 Ostermundigen (CH); WYSS, Daniel, CH-3067 Boll (CH)
(74) Vertreter: BOVARD AG - Patentanwälte
(86) Internationale Anmeldenummer: CH9900205
(87) Internationale Veröffentlichungsnummer: WO00070898

(56) Entgegenhaltungen:
- EP-A- 0 627 837
- EP-A- 0 649 266
- EP-A- 0 817 457
- EP-A- 0 847 178
- US-A- 5 828 839
- PATENT ABSTRACTS OF JAPAN vol. 1998, no. 14, 31. Dezember 1998 (1998-12-31) & JP 10 257189 A (SONY CORP.), 25. September 1998 (1998-09-25)
- PATENT ABSTRACTS OF JAPAN vol. 1998, no. 5, 30. April 1998 (1998-04-30) & JP 10 028135 A (NEC CORP.), 27. Januar 1998 (1998-01-27)
- LI ET AL.: "Multipoint Conferencing for Mobile Communications Network" INTERNATIONAL CONFERENCE ON UNIVERSAL PERSONAL COMMUNICATIONS,US,IEEE, Bd. 1, 1. Januar 1993 (1993-01-01), Seiten 212-216, XP002045266 New York

## Beschreibung

Die vorliegende Erfindung betrifft ein Kommunikationsverfahren und eine geeignete Vorrichtung für Kommunikationsforums. Insbesondere betrifft die vorliegende Erfindung ein Kommunikationsverfahren für Kommunikationsforums gemäss dem Oberbegriff des unabhängigen Verfahrensanspruchs und eine geeignete Vorrichtung für Kommunikationsforums gemäss dem Oberbegriff des unabhängigen Vorrichtungsanspruchs.

Kommunikationsforums, in denen Kommunikationsteilnehmer in einer Kommunikationsrunde über ein Telekommunikationsnetz miteinander kommunizieren können, sind vor allem unter dem Begriff "Chatrooms" bekannt und sind mit der zunehmenden Verbreitung des Internets immer populärer geworden. Chatrooms, das heisst Kommunikationsforums, können themenspezifisch sein und/oder können sich an bestimmte Zielgruppen, zum Beispiel Alters - oder Geschlechtsgruppen, richten. Typischerweise bucht sich ein Kommunikationsteilnehmer mit einem von ihm definierten, eindeutigen Benutzernamen bei einem Kommunikationsforumsdienst (Chat-Service) ein und wählt eines von mehreren angebotenen Kommunikationsforums, das ihn interessiert, wobei er vor seiner definitiven Wahl beispielsweise auch die Anzahl der in diesem Kommunikationsforum bereits an einer Kommunikationsrunde beteiligten Kommunikationsteilnehmer berücksichtigen kann. Danach kann er auf dem Bildschirm seines Kommunikationsendgeräts, typischerweise ein Personal-Computer, der mit einem Modem und über einen Internet-Dienstanbieter mit dem Internet verbunden ist, die im gewählten Kommunikationsforum laufende Kommunikationsrunde mitverfolgen und sich daran beteiligen. Kommunikationsbeiträge der an einer Kommunikationsrunde beteiligten Kommunikationsteilnehmer werden auf dem Bildschirm mit Bezug auf den Autor als Text dargestellt, respektive von den beteiligten Kommunikationsteilnehmern mittels der Tastatur als Text eingegeben. Um der Fülle der von zahlreichen Kommunikationsteilnehmern kommunizierten Texte zu entkommen und/oder um eine private Kommunikationsrunde zu erstellen, können private Kommunikationsforums oder sogenannte Separées mit vordefinierten Befehlen definiert werden. Obwohl solche Kommunikationsforums von vielen Kommunikationsteilnehmern geschätzt werden, finden doch viele Teilnehmer die Eingabe von Text eher mühsam und würden Kommunikationsforums mit mündlichen Kommunikationsrunden vorziehen. Zudem sind die Benutzer der herkömmlichen Kommunikationsforums entweder auf vemetzte Personal-Computer oder auf doch eher unhandliche mobile Computer mit einem für die Darstellung des kommunizierten Texts ausreichend grossen Bildschirm angewiesen.

In der Patentanmeldung EP 817 457 A2 wird ein System für die anonyme Sprachkommunikation beschrieben, in welchem interessierte Kommunikationsteilnehmer, die ein gemeinsames Kommunikationsforum gewählt haben, über ein Telefonnetz zu einer in gesprochener Sprache geführten Kommunikationsrunde zusammengeschaltet werden. Gemäss EP 817 457 A2 müssen die interessierten Kommunikationsteilnehmer die Telefonnummer des Telefonapparates, über den Sie die Kommunikationsrunde führen wollen, und die Identifizierung des gewünschten Kommunikationsforums mittels eines Personal Computers eingeben und die eingegebene Telefonnummer und Identifizierung über ein Zugriffsnetzwerk an das System übermitteln. Das System gemäss EP 817 457 A2 verbindet die den angegebenen Telefonnummern zugeordneten Telefonapparate der Kommunikationsteilnehmer, die ein gemeinsames Kommunikationsforum gewählt haben, mittels einer Konferenzschaltung über das Telefonnetz miteinander. Die notwendige Eingabe der Telefonnummern der zu verwendenden Telefonapparate weist den Nachteil auf, dass dabei Eingabefehler gemacht werden können, was zu irrtümlichen Verbindungen von Kommunikationsteilnehmern führt. Zudem wird die Notwendigkeit, verschiedene Kommunikationsendgeräte für die Auswahl eines Kommunikationsforums und die Erstellung einer Kommunikationsrunde verwenden zu müssen, von den Benutzern als umständlich beurteilt.

Es ist eine Aufgabe dieser Erfindung, ein neues und besseres Verfahren für Kommunikationsforums und eine dafür geeignete Vorrichtung vorzuschlagen, welche insbesondere Kommunikationsforums mit textfreien Kommunikationsrunden ermöglichen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfrndung dadurch erreicht, dass im Kommunikationsverfahren, in welchem mindestens zwei Kommunikationsteilnehmer mittels Kommunikationsendgeräten über ein Telekommunikationsnetz in einer Kommunikationsrunde miteinander kommunizieren, wobei Kommunikationsendgeräte über das Telekommunikationsnetz für eine Kommunikationsrunde zusammengeschaltet werden, wenn Kommunikationsteilnehmer, mittels deren Kommunikationsendgeräte ein gemeinsames Kommunikationsforum gewählt haben, die Kommunikationsteilnehmer in einer genannten Kommunikationsrunde mittels gesprochener Sprache kommunizieren.

Vorzugsweise sind mindestens gewisse genannte Kommunikationsendgeräte Mobilgeräte, beispielsweise Mobilfunktelefone oder kommunikationsfähige Laptop- oder Palmtop-Computer, und das genannte Telekommunikationsnetz umfasst mindestens ein Mobilnetz, beispielsweise ein GSM-, ein UMTS- oder ein anderes Mobilnetz. Dies hat den Vorteil, dass textfreie Kommunikationsforums auch für mobile Kommunikationsteilnehmer verfügbar und zugänglich gemacht werden können.

Vorzugsweise kann ein Kommunikationsteilnehmer über eine Menüstruktur ein Kommunikationsforum aus einer Liste von definierten Kommunikationsforums wählen oder ein neues Kommunikationsforum definieren, wobei einem definierten Kommunikationsforum eine Bezeichnung zugeordnet ist, die beispielsweise einen Themenkreis bezeichnet.

In verschiedenen Ausführungsvarianten wird die Menüstruktur mit der Liste der definierten Kommunikationsforums auf einer Anzeige eines Kommunikationsendgeräts angezeigt und ein Kommunikationsforum mittels Bedienungselementen des Kommunikationsendgeräts gewählt oder definiert, oder ein Kommunikationsforum wird unter sprachgesteuerter Menüführung mittels Bedienungselementen des Kommunikationsendgeräts gewählt oder definiert.

In einer Ausführungsvariante sind mindestens gewisse Kommunikationsforums nur für Kommunikationsteilnehmer verfügbar, die sich in einem bestimmten, dem betreffenden Kommunikationsforum zugeordneten geografischen Gebiet aufhalten. Dies hat den Vorteil, dass Kommunikationsforums, die beispielsweise nur eine lokale Bedeutung haben, nicht unnötig von Kommunikationsteilnehmern belastet werden, die sich ausserhalb des betreffenden Gebiets aufhalten.

Vorzugsweise kann der Zugang zu einem Kommunikationsforum einem interessierten Kommunikationsteilnehmer durch den Kommunikationsteilnehmer, der das Kommunikationsforum definiert hat, verwehrt werden, wodurch es möglich ist, dass Kommunikationsteilnehmer sich private Kommunikationsforums definieren, die nicht von unberechtigten Kommunikationsteilnehmern mitgehört werden können.

Vorzugsweise werden Kommunikationsendgeräte für eine Kommunikationsrunde mittels einer Konferenzschattung zusammengeschaltet. Dies hat den Vorteil, dass bereits bekannte Kommunikationsfunktionen, nämlich die Konferenzschaltung, für die Erstellung von Kommunikationsrunden in Kommunikationsforums benützt werden können.

In einer Ausführungsvariante kann ein Kommunikationsteilnehmer sich für ein Kommunikationsforum vormerken lassen, wenn noch keine anderen Kommunikationsteilnehmer das betreffende Kommunikationsforum gewählt haben, wobei eine Kommunikationsrunde zwischen dem vorgemerkten Kommunikationsteilnehmer und mindestens einem anderen Kommunikationsteilnehmer beginnen kann, wenn dieser mindestens eine andere Kommunikationsteilnehmer das betreffende Kommunikationsforum gewählt hat.

In einer Ausführungsvariante kann ein genannter Kommunikationsteilnehmer sich für mindestens ein Kommunikationsforum vormerken lassen und mindestens einen anderen Kommunikationsteilnehmer als Kommunikationspartner für betreffende Kommunikationsforums spezifizieren, so dass er benachrichtigt wird, wenn ein spezifizierter Kommunikationspartner ein betreffendes Kommunikationsforum gewählt hat. Dadurch kann der vorgemerkte Kommunikationsteilnehmer erst in die Kommunikationsrunde eines betreffenden Kommunikationsforums einbezogen werden, wenn ein spezifizierter Kommunikationspartner ein betreffendes Kommunikationsforum gewählt hat, was in verschiedenen Varianten beispielsweise automatisch, mit oder ohne vorgängige Benachrichtigung des vorgemerkten Kommunikationsteilnehmers erfolgen kann.

In einer Ausführungsvariante weisen mindestens gewisse Kommunikationsforums eine begrenzte zeitliche Verfügbarkeit auf, welche beispielsweise vom Kommunikationsteilnehmer, der das betreffende Kommunikationsforum definiert, oder vom Betreiber des Kommunikationsforumsdienstes festgesetzt werden kann.

Die Erfindung bezieht sich auch auf einen Chat-Server, welcher ein Kommunikationsmodul zur Verbindung mit Telekommunikationsnetzen umfasst, in denen Kommunikationsteilnehmer mittels Kommunikationsendgeräten miteinander kommunizieren, welcher Chat-Server eine Tabelle umfasst, in der Informationen über Kommunikationsforums gespeichert sind, und welcher ein Befehlsmodul umfasst, das von Kommunikationsteilnehmern über Telekommunikationsnetze Befehle entgegennehmen und ausführen kann, wobei das Befehlsmodul Kommunikationsteilnehmern ermöglicht, mittels Befehlen ein Kommunikationsforum zu wählen, respektive ein gewähltes Kommunikationsforum zu verlassen, wobei das Kommunikationsmodul so eingerichtet ist, dass es mindestens zwei Kommunikationsteilnehmer, die ein gemeinsames Kommunikationsforum gewählt haben, für eine Kommunikationsrunde über ein genanntes Telekommunikationsnetz zusammenschalten, respektive einen Kommunikationsteilnehmer von einer Kommunikationsrunde entfernen kann, wobei das Kommunikationsmodul Kommunikationsteilnehmern ermöglicht, in einer Kommunikationsrunde mittels gesprochener Sprache zu kommunizieren.

Nachfolgend wird eine Ausführung der vorliegenden Erfindung anhand eines Beispieles beschrieben. Das Beispiel der Ausführung wird durch die folgende beigelegte Figur illustriert:

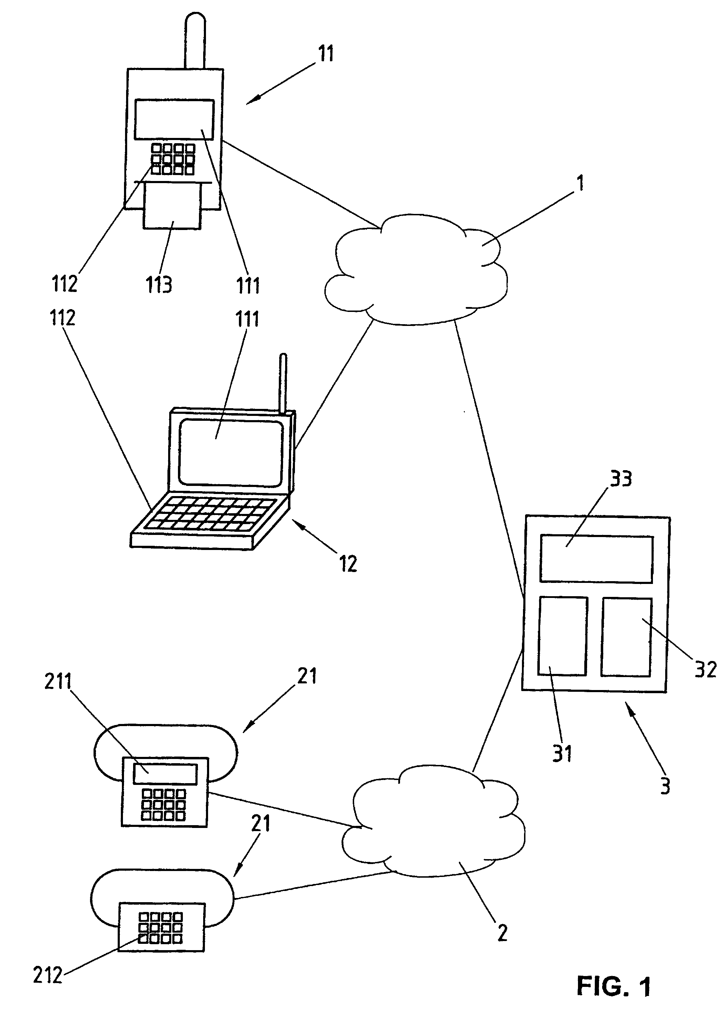

Figur 1 zeigt ein Blockdiagramm, welches schematisch einen Chat-Server illustriert, der mit Telekommunikationsnetzen und darin kommunizierenden Kommunikationsendgeräten verbunden ist.

Das Bezugszeichen 3 bezieht sich auf einen Chat-Server, der beispielsweise auf einem herkömmlichen Kommunikationsserver basiert und über die notwendigen Hard- und Softwarekomponenten verfügt, um im nachfolgend beschriebenen Verfahren die Funktion und Dienste eines Kommunikationsforumsservers auszuführen, das heisst, um Kommunikationsteilnehmern in Telekommunikationsnetzen 1, 2, insbesondere in Mobilnetzen 1, zu ermöglichen, mittels deren Kommunikationsendgeräten 11, 12, 21, insbesondere Mobilgeräte 11, 12, Kommunikationsforums zu wählen, gegebenenfalls neue Kommunikationsforums zu definieren, und in gewählten Kommunikationsforums an Kommunikationsrunden teilzunehmen, die in gesprochener Sprache geführt werden.

Der Chat-Server 3 verfügt über eine Tabelle 33, in der Informationen über Kommunikationsforums gespeichert sind, zum Beispiel für ein Kommunikationsforum eine Bezeichnung oder einen Namen, die beispielsweise einen Themenkreis oder eine Zielgruppe von Kommunikationsteilnehmern angeben, eine Angabe über die Anzahl Kommunikationsteilnehmer, die an der Kommunikationsrunde des Kommunikationsforums teilnehmen, Angaben über eine beschränkte zeitliche und/oder geografische Gültigkeit und/oder Verfügbarkeit des Kommunikationsforums, beispielsweise ein Verfalldatum und/oder Zeitangabe, respektive eine Ortsbezeichnung oder geografische Koordinaten und Bereichsangaben, Angaben darüber, wer das Kommunikationsforum definiert hat, beispielsweise eine temporäre oder allgemeingültige Identifizierung eines Kommunikationsteilnehmers oder ein Hinweis auf einen Kommunikationsforumsdienstanbieter, Angaben über die Sprache der Kommunikationsrunde des Kommunikationsforums sowie andere Informationen, von denen einige in der folgenden Beschreibung näher erläutert werden. Die Tabelle 33 ist beispielsweise auf der gleichen Hardware-Plattform wie der Chat-Server 3 oder auf einem anderen, dem Chat-Server 3 zugänglichen Computer implementiert und kann von programmierten Softwaremodulen des Chat-Servers 3 gelesen und beschrieben werden.

Der Chat-Server 3 umfasst ein Kommunikationsmodul 31 mit den nötigen Hard- und Softwarekomponenten, um den Chat-Server 3 mit Telekommunikationsnetzen 1, 2 zu verbinden und über diese Telekommunikationsnetze 1,2 mit Kommunikationsendgeräten 11, 12, 21 zu kommunizieren. Wie bereits oben erwähnt wurde, umfassen die mit dem Chat-Server 3 verbundenen Telekommunikationsnetze 1, 2 mindestens ein Mobilnetz 1, beispielsweise ein GSM-, UMTS- oder ein anderes Mobilnetz, über welches Kommunikationsteilnehmer mit Mobilgeräten 11, 12, beispielsweise Mobilfunktelefone 11 oder geeignete kommunikationsfähige Laptop- oder Palmtop-Computer 12, beispielsweise über das Kommunikationsmodul 31 mit dem Chat-Server 3 kommunizieren können. Wie in der Figur 1 dargestellt ist, können aber auch Festnetze 2 mit dem Chat-Server 3 verbunden sein, beispielsweise das öffentliche geschaltete Telefonnetz (PSTN, Public Switched Telephone Network), ein ISDN-Netzwerk (Integrated Services Digital Network), ein LAN (Local Area Network) oder WAN (Wide Area Network), oder ein Intranet oder das Internet, über welche Kommunikationsteilnehmer mit fixen, das heisst festinstallierten Kommunikationsendgeräten 21, beispielsweise Telefonapparate, beispielsweise über das Kommunikationsmodul 31 mit dem Chat-Server 3 kommunizieren können. Das Kommunikationsmodul 31 kann auch so eingerichtet werden, dass andere, spezielle Telekommunikationsnetze mit dem Chat-Server 3 verbunden werden können, zum Beispiel für die Kommunikation geeignete Stromnetze, sogenannte PLC-Netze (Power Line Communication), über welche Kommunikationsendgeräte mittels geeigneten Stromleitungskommunikationsmodulen miteinander kommunizieren können, wie dies beispielsweise in der noch nicht veröffentlichten Patentanmeldung (Anmeldenummer PCT/CH98/00553) im Namen der Anmelderin beschrieben wurde, oder sogenannte Supernetze, welche mindestens über ein Festnetz und über ein Supernetz-VLR (Visitor Location Register) verfügen, in welche Supernetz-VLR sich Kommunikationsteilnehmer beispielsweise mit SIM-Karten (Subscriber Identity Module) einbuchen können, wie dies beispielsweise in der noch nicht veröffentlichten Patentanmeldung (Anmeldenummer PCT/CH99/00087) im Namen der Anmelderin beschrieben wurde.

Das Kommunikationsmodul 31 verfügt insbesondere über die Funktion, mehrere Kommunikationsteilnehmer mit ihren Kommunikationsendgeräten 11, 12, 21, beispielsweise in einer Konferenzschaltung, zusammenzuschalten, zum Beispiel, wenn diese Kommunikationsteilnehmer das selbe Kommunikationsforum gewählt haben, wie später beschrieben wird, wobei hinzukommende Kommunikationsteilnehmer zu einer bereits bestehenden Konferenzschaltung hinzugeschaltet, respektive Kommunikationsteilnehmer, die ein Kommunikationsforum verlassen, von der Zusammenschaltung, beispielsweise von der Konferenzschaltung, entfernt werden können. Der Fachmann wird verstehen, dass das Kommunikationsmodul 31 diese Zusammenschaltung direkt vornehmen kann oder entsprechende Dienste einer geeigneten Netzwerkeinheit zu Hilfe nehmen kann, beispielsweise Dienste einer Vermittlungszentrale, für die Erstellung einer Konferenzschaltung.

Um Zugang zu den Diensten des Chat-Servers 3 zu erhalten, erstellt ein interessierter Kommunikationsteifnehmer mit einem Kommunikationsendgerät 11, 12, 21 eine Kommunikationsverbindung mit dem Chat-Server 3, indem er beispielsweise eine dafür bestimmte Dienstnummer anruft. Die Dienste des Chat-Servers 3 können zum Beispiel nur für berechtigte Kommunikationsteilnehmer verfügbar gemacht werden, wobei vom Kommunikationsteilnehmer beispielsweise ein persönlicher Zutrittscode verlangt wird oder indem seine Berechtigung beispielsweise anhand einer Benutzeridentifizierung überprüft wird, die beispielsweise auf einem mit dem Kommunikationsendgerät 11 (entfernbar) verbundenen Identifizierungsmodul 113 gespeichert ist, beispielsweise eine SIM-Karte (Subscriber Identification Module) oder in einem Applet in einer Java SIM-Karte (Java ist ein eingetragenes Warenzeichen der Firma Sun Microsystems) und an den Chat-Server 3 übertragen wird.

Der Chat-Server 3 umfasst ein Befehlsmodul 32, beispielsweise ein programmiertes Softwaremodul, welches, beispielsweise über eine Softwareschnittstelle, Zugang zu den Diensten des beschriebenen Kommunikationsmoduls 31 hat und auf die Tabelle 33 zugreifen kann, wie oben erwähnt wurde. Das Befehlsmodul 32 nimmt über das Kommunikationsmodul 31 Befehle entgegen, die von Kommunikationsteilnehmern mittels deren Kommunikationsendgeräte 11, 12, 21 über Telekommunikationsnetze 1, 2 an den Chat-Server 3 übertragen wurden.

In einer ersten Ausführungsvariante übermittelt das Befehlsmodul 32 dem Kommunikationsteilnehmer, respektive dem Kommunikationsendgerät 11, 12, 21 dieses Kommunikationsteilnehmers, mit gesprochener Sprache, zum Beispiel mittels einem Sprachsynthesizer oder mittels abgespeicherten Sprachsequenzen, verschiedene Menüoptionen, welche vom Kommunikationsteilnehmer mittels der Bedienungselemente 112, 212 des Kommunikationsendgeräts 11, 12, 21 gewählt werden können, wobei es beispielsweise nützlich sein kann, wenn der Kommunikationsteilnehmer durch Eingabe eines bestimmten Befehls, beispielsweise durch Eingabe der *-Taste, vom Befehlsmodul 32 immer eine Übersicht der wichtigsten Befehle übermittelt bekommt. Nachdem ein Kommunikationsteilnehmer eine Kommunikationsverbindung zum Chat-Server 3 erstellt hat, kann das Befehismodul 32 dem betreffenden Kommunikationsteilnehmer, respektive dem Kommunikationsendgerät 11, 12, 21 dieses Kommunikationsteilnehmers, beispielsweise zunächst eine Übersicht der wichtigsten Befehle sowie eine Liste der verfügbaren Kommunikationsforums übermitteln.

In einer zweiten Ausführungsvariante umfasst das Befehlsmodul 32 ein Spracherkennungsmodul, welches den Kommunikationsteilnehmern ermöglicht, mittels eines Kommunikationsendgeräts 11, 12, 21 direkte, gesprochene Befehle an das Befehlsmodul 32 zu übermitteln, wobei diese Befehle vorzugsweise vordefinierte Stichworte sind, beispielsweise in einer wählbaren Sprache, und wobei es auch in dieser Ausführungsvariante nützlich sein kann, wenn der Kommunikationsteilnehmer durch Übermittlung eines bestimmten Befehls, beispielsweise durch Übermittlung des Stichworts "Help", vom Befehlsmodul 32 immer eine Übersicht der wichtigsten Befehle übermittelt bekommt. Für diese zweite Ausführungsvariante ist es auch sinnvoll, wenn der Kommunikationsteilnehmer durch Übermittlung eines bestimmten Befehls an das Befehlsmodul 32, beispielsweise durch Übermittlung der Stichworte "Switch Mode", zwischen einem Befehlsmodus und einem Kommunikationsmodus umschalten kann. Nachdem ein Kommunikationsteilnehmer eine Kommunikationsverbindung zum Chat-Server 3 erstellt hat, kann das Befehlsmodul 32 dem betreffenden Kommunikationsteilnehmer, respektive dem Kommunikationsendgerät 11, 12, 21 dieses Kommunikationsteilnehmers, beispielsweise zunächst eine Übersicht der wichtigsten Befehle sowie eine Liste der verfügbaren Kommunikationsforums übermitteln, zum Beispiel mittels einem Sprachsynthesizer oder mittels abgespeicherten Sprachsequenzen.

In einer dritten Ausführungsvariante wird dem Kommunikationsteilnehmer auf der Anzeige 111, 211 des Kommunikationsendgeräts eine Menüstruktur angezeigt, aus welcher der Kommunikationsteilnehmer Menüoptionen mittels Bedienungselementen 112, 212 des Kommunikationsendgeräts 11, 21 wählen und automatisch an das Befehlsmodul 32 des Chat-Servers 3 übertragen lassen kann. Der Fachmann wird verstehen, dass die Menüstruktur und deren Darstellung und Bedienung auf verschiedenste Weise implementiert werden kann. Beispielsweise können entsprechende programmierte Softwarefunktionen basierend auf WAP (Wireless Application Protocol) oder mittels eines verfügbaren SIM-Toolkits implementiert werden, entsprechende programmierte Söftwarefunktionen können, beispielsweise in der Form von Applets, zum Beispiel Java-Applets (Java ist ein eingetragenes Warenzeichen von Sun Microsystems), im Kommunikationsendgerät 11, beispielsweise auf einer Chipkarte 113, zum Beispiel eine SIM-Karte, gespeichert und ausgeführt werden, oder vom Chat-Server 3 zur Ausführung an das Kommunikationsendgerät 11, 12, 21 übertragen werden. Dabei werden ausführbare Programme und/oder Daten, beispielsweise Informationen vom Chat-Server 3 über verfügbare Kommunikationsforums, die im Kommunikationsendgerät 11, 12, 21 in die Menüstruktur integriert werden, oder vom Kommunikationsteilnehmer gewählte Menüoptionen die an das Befehlsmodul 32 des Chat-Servers 3 gerichtet sind, über das Telekommunikationsnetz 1, 2 übertragen, beispielsweise mittels speziellen Kurzmeldungen, wie SMS- (Short Message Services), USSD- (Unstructured Supplementary Services Data) oder anderen Meldungen über ein Mobilnetz 1, oder über den Dienstkanal eines ISDN-Netzes 2. Es ist auch möglich, dass der Chat-Server 3 die gesamte Menüstruktur zusammen mit den erwähnten Daten, beispielsweise in einem Applet, über das Telekommunikationsnetz 1 an ein Kommunikationsendgerät 11, 12 überträgt.

Diese drei verschiedenen Ausführungsvarianten können alternative Ausführungsvarianten sein oder sie können vom Chat-Server 3 beispielsweise als wählbare Optionen für unterschiedliche Typen von Kommunikationsendgeräten 11, 12, 21 als sich ergänzende Ausführungsvarianten angeboten werden, zum Beispiel verfügbar unter verschiedenen Dienstnummern. An dieser Stelle sollte ausdrücklich darauf hingewiesen werden, dass die vorliegende Erfindung, insbesondere wegen der Möglichkeit verschiedene Telekommunikationsnetze 1, 2 an den Chat-Server 3 anzuschliessen sowie dank den verschiedenen Mechanismen um Befehle entgegenzunehmen und verschiedene Kommunikationsendgeräte 11, 12, 21 zu unterstützen, Kommunikationsteilnehmern aus verschiedenen und unterschiedlichen Telekommunikationsnetzen 1, 2 ermöglicht sich an einem gemeinsamen Kommunikationsforum zu beteiligen.

Die Befehle die vom Kommunikationsteilnehmer an das Befehlsmodul 32 des Chat-Servers 3 übertragen werden können umfassen Befehle, wie sie beispielsweise in den eingangs erwähnten Chatrooms auf dem Internet üblich sind, insofern sich diese Befehle auf Kommunikationsrunden in gesprochener Sprache anwenden lassen. Zum Beispiel kann ein Kommunikationsteilnehmer sich mit einem für den betreffenden Kommunikationsforumsdienst eindeutigen Benutzernamen anmelden, ein gewünschtes Kommunikationsforum aus den oben beschriebenen Menüoptionen wählen, ein gewähltes Kommunikationsforum verlassen, ein neues Kommunikationsforum definieren, anderen interessierten Kommunikationsteilnehmern den Zugang zum persönlichen definierten Kommunikationsforum gestatten oder verwehren, Informationen über verfügbare Kommunikationsforums abrufen, zum Beispiel die Anzahl und/oder Benutzernamen, beispielsweise Aliasnamen oder tatsächliche Namen, der an einem Kommunikationsforum teilnehmenden Kommunikationsteilnehmer, vertrauliche, für andere Kommunikationsteilnehmer nicht hörbare Meldungen an spezifizierte Kommunikationsteilnehmer übermitteln, usw.

An dieser Stelle sollte auch erwähnt werden, dass sich ein Kommunikationsteilnehmer für ein gewünschtes Kommunikationsforum vormerken lassen kann, wenn noch keine anderen Kommunikationsteilnehmer dieses betreffende Kommunikationsforum gewählt haben. Dabei wird eine Kommunikationsrunde zwischen dem vorgemerkten Kommunikationsteilnehmer und einem weiteren Kommunikationsteilnehmer, der das betreffende Kommunikationsforum wählt, durch Zusammenschalten der betreffenden Kommunikationsendgeräte 11, 12, 21 eingeleitet, wobei dies beispielsweise automatisch erfolgt oder wobei dem vorgemerkten Kommunikationsteilnehmer vom Befehlsmodul 32 des Chat-Server 3 vorerst eine Mitteilung betreffend den weiteren Kommunikationsteilnehmern übermittelt wird und sich der vorgemerkte Kommunikationsteilnehmer mittels entsprechender Befehlseingabe nun an der Kommunikationsrunde des betreffenden Kommunikationsforums beteiligen kann oder nicht. Auf ähnliche Weise kann sich ein Kommunikationsteilnehmer bei einem bestimmten Kommunikationsforum, oder in einer Variante bei allen beim betreffenden Chat-Server 3 verfügbaren Kommunikationsforums, für einen von ihm spezifizierten anderen Kommunikationsteilnehmer vormerken lassen, so dass der vorgemerkte Kommunikationsteilnehmer in die Kommunikationsrunde des bestimmten, respektive eines beliebigen Kommunikationsforums einbezogen wird, wenn der weitere spezifizierte Kommunikationsteilnehmer das bestimmte, respektive ein beliebiges verfügbares Kommunikationsforum wählt. Der Kommunikationsteilnehmer kann sich auch für einen von ihm spezifizierten anderen Kommunikationsteilnehmer so vormerken lassen, dass er, beispielsweise vom Befehlsmodul 32 des Chat-Server 3, benachrichtigt wird, wenn der weitere spezifizierte Kommunikationsteilnehmer ein bestimmtes, respektive ein beliebiges verfügbares Kommunikationsforum wählt oder ein solches verlässt.

In einer weiteren Ausführungsvariante kann die aktuelle geografische Position eines Kommunikationsteilnehmers vom Befehlsmodul 32 des Chat-Servers 3 berücksichtigt werden, indem sie beispielsweise mit den oben erwähnten Angaben über die geografische Gültigkeit und/oder Verfügbarkeit der Kommunikationsforums verglichen wird, so dass dem betreffenden Kommunikationsteilnehmer beispielsweise nur diejenigen Kommunikationsforums zur Wahl angeboten werden, die für seine aktuelle geografische Position gültig, respektive verfügbar sind. Für diesen Zweck wird die aktuelle Position eines Kommunikationsteilnehmers an den Chat-Server 3 übermittelt, wobei sie beispielsweise durch Positionsbestimmungsmittel im Kommunikationsendgerät 11, 12, zum Beispiel durch einen satellitenbasierten GPS-Empfänger (Global Positioning System) oder einen terrestrischen TPS-Empfänger (Terrestrial Positioning System), oder vom Mobilnetz 1 bestimmt wird. Die Auswahl an Kommunikationsforums kann vom Chat-Server 3 auch unter Berücksichtigung des aktuellen Datums und/oder der Zeit eingeschränkt werden, indem die oben erwähnten Angaben über eine beschränkte zeitliche Gültigkeit und/oder Verfügbarkeit des Kommunikationsforums berücksichtigt werden. In einem Anwendungsbeispiel kann so ein Kommunikationsforum definiert werden, das sich auf einen zeitlich und örtlich begrenzten Anlass bezieht, beispielsweise eine Sportveranstaltung eines lokalen Veranstalters, welche zu einem definierten Zeitpunkt stattfindet. Ein Kommunikationsforum kann auch auf Kommunikationsteilnehmer beschränkt werden, die einem bestimmten Telekommunikationsnetz 1, 2 oder einem bestimmten Netzwerkbetreiber zugehören.

Wenn ein Kommunikationsteilnehmer gemäss den oben beschriebenen Ausführungsvarianten der Befehlsübermittlung ein bestimmtes Kommunikationsforum wählt, können ihm vom Befehlsmodul beispielsweise zunächst einige Informationen über das betreffende Kommunikationsforum übermittelt werden, beispielsweise wieviele Kommunikationsteilnehmer bereits in einer Kommunikationsrunde des Kommunikationsforums beteiligt sind, die örtliche Distanz zwischen dem Kommunikationsteilnehmer und den bereits in einer Kommunikationsrunde des Kommunikationsforums teilnehmenden Kommunikationsteilnehmern, ob sich Kommunikationsteilnehmer für das Kommunikationsforum haben vormerken lassen oder in welcher Sprache die Kommunikationsrunde des Kommunikationsforums geführt wird. Auf Grund dieser Informationen kann sich der Kommunikationsteilnehmer entscheiden, an der Kommunikationsrunde des betreffenden Kommunikationsforums teilzunehmen, sich dafür vormerken lassen oder ein anderes Kommunikationsforum zu wählen. Wenn der Kommunikationsteilnehmer mit entsprechender Befehlsübermittlung dem Befehlsmodul 32 des Chat-Servers 3 anzeigt, dass er an der Kommunikationsrunde des betreffenden Kommunikationsforums teilnehmen möchte, schaltet das Befehlsmodul 32 unter Zuhilfenahme oben erwähnter Funktionen des Kommunikationsmoduls 31 das Kommunikationsendgerät 11, 12, 21 des Kommunikationsteilnehmers zu einer bereits bestehenden Kommunikationsrunde dazu, beispielsweise durch Hinzufügen zu einer bereits bestehenden Konferenzschaltung, oder er erstellt eine neue Kommunikationsrunde zwischen dem Kommunikationsteilnehmer und weiteren, für das betreffende Kommunikationsforum vorgemerkten Kommunikationsteilnehmern. Durch Beenden der Kommunikationsverbindung zum Chat-Server 3, oder durch Übermittlung entsprechender Befehle an das Befehlsmodul 32 kann der Kommunikationsteilnehmer ein gewähltes Kommunikationsforum verlassen. Informationen über die Beteiligung von Kommunikationsteilnehmern an Kommunikationsrunden der Kommunikationsforums werden vom Befehlsmodul 32 ständig in der Tabelle 33 aktualisiert, wobei in der Tabelle 33 für jedes Kommunikationsforum auch eine Referenz auf eine erstellte Zusammenschaltung, beispielsweise eine Konferenzschaltung, gespeichert wird.

Kommunikationsforumsdienste können interessierten Kommunikationsteilnehmern beispielsweise kostenlos angeboten werden, wobei die Kosten für den Dienst beispielsweise von einer Sponsorfirma zu Werbezwecken übernommen werden, oder durch die dabei verdienten Einnahmen aus der kostenpflichtigen Benützung der Kommunikationsdienste zum Chat-Server 3 gedeckt werden, wenn der Kommunikationsforumsdienst von einem Kommunikationsbetreiber angeboten wird. Der Zugang zu kostenpflichtigen Kommunikationsforumsdiensten kann, wie oben erwähnt, durch Zutrittscodes oder durch Erstellen einer Liste mit berechtigten Kommunikationsteilnehmern kontrolliert werden. Es kann auch interessant sein, betriebsbereite Chat-Server 3 oder Datenträger mit darauf gespeicherten Softwaremodulen zur Steuerung eines geeigneten Kommunikationsservers als Chat-Server 3 an Interessenten zu verkaufen oder unter Lizenzgebühren zu vermieten. Zudem können auch Chipkarten. beispielsweise SIM-Karten 113, verkauft werden, die geeignete Softwaremodule enthalten, um mit einem geeigneten Kommunikationsendgerät 11 an Kommunikationsforums teilzunehmen, die von einem oder mehreren Chat-Server 3 angeboten werden. Verdienstmöglichkeiten ergeben sich zudem dadurch, dass ein Kommunikationsforum von einem Moderator moderiert wird, wobei der Moderator beispielsweise eine bekannte Persönlichkeit, ein Fachmann eines bestimmten Sachgebiets oder ein Unterhalter ist.

## Patentansprüche

1. Kommunikationsverfahren, in welchem mindestens zwei Kommunikationsteilnehmer mittels Kommunikationsendgeräten (11, 12, 21) über ein Telekommunikationsnetz (1, 2) in einer Kommunikationsrunde miteinander mittels gesprochener Sprache kommunizieren, wobei die genannten Kommunikationsendgeräte (11, 12, 21) über das genannte Telekommunikationsnetz (1, 2) für eine genannte Kommunikationsrunde zusammengeschaltet werden, wenn die genannten Kommunikationsteilnehmer ein gemeinsames Kommunikationsforum gewählt haben, **dadurch gekennzeichnet,**
**dass** die genannten Kommunikationsteilnehmer das gemeinsame Kommunikationsforum mittels der genannten Kommunikationsendgeräte (11, 12, 21) wählen.

2. Kommunikationsverfahren gemäss Anspruch 1, **dadurch gekennzeichnet, dass** mindestens gewisse der genannten Kommunikationsendgeräte Mobilgeräte (11, 12) sind, und dass das genannte Telekommunikationsnetz mindestens ein Mobilnetz (1) umfasst.

3. Kommunikationsverfahren gemäss einem der Ansprüche 1 oder 2, **dadurch gekennzeichnet, dass** die genannten Kommunikationsteilnehmer über eine Menüstruktur ein Kommunikationsforum aus einer Liste von definierten Kommunikationsforums wählen oder ein neues Kommunikationsforum definieren, wobei einem definierten Kommunikationsforum eine Bezeichnung zugeordnet ist, die beispielsweise einen Themenkreis bezeichnet.

4. Kommunikationsverfahren gemäss Anspruch 3, **dadurch gekennzeichnet, dass** die genannte Menustruktur auf einer Anzeige (111, 211) der genannten Kommunikationsendgeräte (11, 12, 21) angezeigt wird, und dass das genannte Kommunikationsforum mittels Bedienungselementen (112, 212) der genannten Kommunikationsendgeräte (11, 12, 21) gewählt oder definiert wird.

5. Kommunikationsverfahren gemäss Anspruch 3, **dadurch gekennzeichnet, dass** das genannte Kommunikationsforum unter sprachgesteuerter Menüführung mittels Bedienungselementen (112, 212) der genannten Kommunikationsendgeräte (11,121 21) gewählt oder definiert wird.

6. Kommunikationsverfahren gemäss einem der Ansprüche 1 bis 5, **dadurch gekennzeichnet, dass** mindestens gewisse der genannten Kommunikationsforums nur für Kommunikationsteilnehmer verfügbar sind, die sich in einem bestimmten, dem betreffenden Kommunikationsforum zugeordneten geografischen Gebiet aufhalten.

7. Kommunikationsverfahren gemäss einem der Ansprüche 3 bis 6, **dadurch gekennzeichnet, dass** der Zugang zu einem genannten Kommunikationsforum einem interessierten Kommunikationsteilnehmer durch den genannten Kommunikationsteilnehmer, der das genannte Kommunikationsforum definiert hat, verwehrbar ist.

8. Kommunikationsverfahren gemäss einem der Ansprüche 1 bis 7, **dadurch gekennzeichnet, dass** die genannten Kommunikationsendgeräte (11, 12, 21) für eine genannte Kommunikationsrunde mittels einer Konferenzschaltung zusammengeschaltet werden.

9. Kommunikationsverfahren gemäss einem der Ansprüche 1 bis 8, **dadurch gekennzeichnet, dass** einer der genannten Kommunikationsteilnehmer sich für ein Kommunikationsforum vormerkt, wenn noch keine anderen Kommunikationsteilnehmer das betreffende Kommunikationsforum gewählt haben, und dass eine Kommunikationsrunde zwischen dem vorgemerkten Kommunikationsteilnehmer und mindestens einem anderen Kommunikationsteilnehmer beginnt, wenn dieser mindestens eine andere Kommunikationsteilnehmer das betreffende Kommunikationsforum gewählt hat.

10. Kommunikationsverfahren gemäss einem der Ansprüche 1 bis 9, **dadurch gekennzeichnet, dass** einer der genannten Kommunikationsteilnehmer sich für mindestens ein Kommunikationsforum vormerkt, wobei er zudem mindestens einen anderen Kommunikationsteilnehmer als Kommunikationspartner für das betreffende Kommunikationsforum spezifiziert, so dass er benachrichtigt wird, wenn ein spezifizierter Kommunikationspartner ein betreffendes Kommunikationsforum gewählt hat.

11. Kommunikationsverfahren gemäss einem der Ansprüche 1 bis 10, **dadurch gekennzeichnet, dass** mindestens gewisse der genannten Kommunikationsforums eine begrenzte zeitliche Verfügbarkeit aufweisen.

12. Chat-Server (3), welcher ein Kommunikationsmodul (31) zur Verbindung mit Telekommunikationsnetzen (1,2) umfasst, in denen Kommunikationsteilnehmer mittels Kommunikationsendgeräten (11, 12, 21) miteinander kommunizieren, welcher über eine Tabelle (33) verfügt, in der Informationen über Kommunikationsforums gespeichert sind, und welcher ein Befehlsmodul (32) umfasst, das so eingerichtet ist, dass es von den genannten Kommunikationsteilnehmern Befehle entgegennehmen und ausführen kann, wobei das genannte Befehlsmodul (32) den genannten Kommunikationsteilnehmern ermöglicht, mittels der genannten Befehle eines der genannten Kommunikationsforums zu wählen, wobei das genannte Kommunikationsmodul (31) so eingerichtet ist, dass es mindestens zwei der genannten Kommunikationsteilnehmer, die ein gemeinsames Kommunikationsforum gewählt haben, für eine Kommunikationsrunde, in welcher die genannten Kommunikationsteilnehmer mittels gesprochener Sprache kommunizieren, über ein genanntes Telekommunikationsnetz (1, 2) zusammenschalten kann, **dadurch gekennzeichnet,**
**dass** das Befehlsmodul (32) zudem so eingerichtet ist, dass es von den genannten Kommunikationsteilnehmern mittels der genannten Kommunikationsendgeräte (11, 12, 21) eingegebene genannte Befehle über die genannten Telekommunikationsnetze (1, 2) entgegennehmen kann.

13. Chat-Server (3) gemäss Anspruch 12, **dadurch gekennzeichnet, dass** mindestens gewisse der genannten Kommunikationsendgeräte Mobilgeräte (11, 12) sind, und dass die genannten Telekommunikationsnetze mindestens ein Mobilnetz (1) umfassen.

14. Chat-Server (3) gemäss einem der Ansprüche 12 oder 13, **dadurch gekennzeichnet, dass** das genannte Befehlsmodul (32) so eingerichtet ist, dass die genannten Kommunikationsteilnehmer ein Kommunikationsforum aus der genannten Tabelle (33) wählen oder ein neues Kommunikationsforum definieren können, wobei einem definierten Kommunikationsforum eine Bezeichnung zugeordnet ist, die beispielsweise einen Themenkreis bezeichnet.

15. Chat-Server (3) gemäss Anspruch 14, **dadurch gekennzeichnet, dass** das genannte Befehlsmodul (32) so eingerichtet ist, dass es eine Liste der in der genannten Tabelle (33) gespeicherten definierten Kommunikationsforums erstellen und mittels des genannten Kommunikationsmoduls (31) über die genannten Telekommunikationsnetze (1,2) an die genannten Kommunikationsendgeräte (11, 12, 21) übermitteln kann.

16. Chat-Server (3) gemäss einem der Ansprüche 12 bis 15, **dadurch gekennzeichnet, dass** mindestens gewisse der in der genannten Tabelle (33) gespeicherten Einträge betreffend Kommunikationsforums geografisch begrenzt sind und Angaben über ein geografisches Gebiet umfassen, und dass das genannte Befehlsmodul (32) so eingerichtet ist, dass es geografisch begrenzte Kommunikationsforums nur für Kommunikationsteilnehmer verfügbar macht, die sich in diesem geografischen Gebiet aufhalten.

17. Chat-Server (3) gemäss einem der Ansprüche 14 bis 16, **dadurch gekennzeichnet, dass** mindestens gewisse der in der genannten Tabelle (33) gespeicherten Einträge betreffend Kommunikationsforums Angaben über einen ersten Kommunikationsteilnehmer umfassen, der das betreffende Kommunikationsforum definiert hat, und dass das genannte Befehlsmodul (32) so eingerichtet ist, dass es Befehle von einem zweiten Kommunikationsteilnehmer betreffend die Wahl eines der genannten Kommunikationsforums an den ersten Kommunikationsteilnehmer weiterleiten und von diesem ersten Kommunikationsteilnehmer einen Befehl entgegennehmen kann, um dem zweiten Kommunikationsteilnehmer den Zugang zum betreffenden Kommunikationsforum zu verwehren.

18. Chat-Server (3) gemäss einem der Ansprüche 12 bis 17, **dadurch gekennzeichnet, dass** das genannte Kommunikationsmodul (31) so eingerichtet ist, dass es Kommunikationsendgeräte (11,12, 21) für eine der genannten Kommunikationsrunden mittels einer Konferenzschaltung zusammenschalten kann.

19. Chat-Server (3) gemäss einem der Ansprüche 12 bis 18, **dadurch gekennzeichnet, dass** mindestens gewisse der in der genannten Tabelle (33) gespeicherten Einträge betreffend Kommunikationsforums Angaben über Kommunikationsteilnehmer umfassen, die sich für ein Kommunikationsforum haben vormerken lassen, wenn noch keine anderen Kommunikationsteilnehmer das betreffende Kommunikationsforum gewählt haben, und dass das genannte Befehlsmodul (32) so eingerichtet ist, dass es eine Kommunikationsrunde zwischen dem vorgemerkten Kommunikationsteilnehmer und mindestens einem anderen Kommunikationsteilnehmer zusammenschalten kann, wenn dieser mindestens eine andere Kommunikationsteilnehmer das betreffende Kommunikationsforum gewählt hat.

20. Chat-Server (3) gemäss einem der Ansprüche 12 bis 19, **dadurch gekennzeichnet, dass** mindestens gewisse der in der genannten Tabelle (33) gespeicherten Einträge betreffend Kommunikationsforums Angaben über erste Kommunikationsteilnehmer, die sich für ein Kommunikationsforum haben vormerken lassen, und über zweite Kommunikationsteilnehmer, die vom ersten Kommunikationsteilnehmer als Kommunikationspartner spezifiziert wurden, umfassen, und dass das genannte Befehlsmodul (32) so eingerichtet ist, dass es einen vorgemerkten ersten Kommunikationsteilnehmer benachrichtigt, wenn ein spezifizierter Kommunikationspartner ein betreffendes Kommunikationsforum gewählt hat.

21. Chat-Server (3) gemäss einem der Ansprüche 12 bis 20, **dadurch gekennzeichnet, dass** mindestens gewisse der in der genannten Tabelle (33) gespeicherten Einträge betreffend Kommunikationsforums Angaben betreffend eine begrenzte zeitliche Verfügbarkeit umfassen.

## Claims

1. Communication method, in which at least two communication participants communicate with one another by means of spoken language in a round of communication by means of communications terminals (11, 12, 21) via a telecommunications network (1, 2), the said communications terminals (11, 12, 21) being interconnected via the said telecommunications network (1, 2) for a said communication round when the said communication participants have selected a common communication forum, **characterised**
**in that** the said communication participants select the common communication forum by means of the said communications terminals (11, 12, 21).

2. Communication method according to claim 1, **characterised in that** at least certain of the said communications terminals are mobile devices (11, 12), and the said communications network comprises at least one mobile network.

3. Communication method according to claim 1 or 2, **characterised in that** the said communication participants select, via a menu structure, a communication forum from a list of defined communication forums or define a new communication forum, a defined communication forum being assigned a designation, designating for example a topic.

4. Communication method according to claim 3, **characterised in that** the said menu structure is displayed on a display (111, 211) of the said communications terminals (11, 12, 21), and the said communication forum is selected or defined by means of operating elements (112, 212) of the said communications terminals (11, 12, 21).

5. Communication method according to claim 3, **characterised in that** the said communication forum is selected or defined under speech-controlled menu guidance by means of operating elements (112, 212) of the said communications terminal (11, 12, 21).

6. Communication method according to one of the claims 1 to 5, **characterised in that** at least certain of the said communication forums are available only to communication participants located in a particular geographical area assigned to the respective communication forum.

7. Communication method according to one of the claims 3 to 6, **characterised in that** access to a said communication forum can be denied to an interested communication participant by the said communication participant who defined the said communication forum.

8. Communication method according to one of the claims 1 to 7, **characterised in that** the said communications terminals (11,12, 21) are interconnected for a said communication round by means of conference circuit.

9. Communication method according to one of the claims 1 to 8, **characterised in that** one of the said communication participants registers for a communication forum when no other communication participant has yet selected the respective communication forum, and a round of communication between the registered communication participant and at least one other communication participant begins when this at least one other communication participant has selected the respective communication forum.

10. Communication method according to one of the claims 1 to 9, **characterised in that** one of the said communication participants registers for at least one communication forum specifying in addition at least one other communication participant as a communication partner for the respective communication forum, so that he is notified when a specified communication partner has selected a respective communication forum.

11. Communication method according to one of the claims 1 to 10, **characterised in that** at least certain of the said communication forums have a temporally limited availability.

12. Chat server (3) which comprises a communications module (31) for connection with telecommunications networks (1, 2) in which communication participants communicate with one another by means of communications terminals (11, 12, 21), which server has a table (33) in which information about communication forums is stored, and which server has a command module (32) that is set up such that it is able to receive and execute commands from the said communication participants, the said command module (32) enabling the said communication participants to select one of the said communication forums by means of the said commands, the said communications module (31) being set up such that it is able to interconnect at least two of the said communication participants, who have selected a common communication forum, for a round of communication, in which the said communication participants communicate by means of spoken language, over a said telecommunications network (1, 2), **characterised**
**in that** the command module (32) is moreover set up such that it is able to receive over the said telecommunications networks (1, 2) said commands entered by the said communication participants by means of the said communication terminals (11, 12, 21).

13. Chat server (3) according to claim 12, **characterised in that** at least certain of the said communications terminals are mobile devices (11, 12), and said telecommunications networks comprise at least one mobile network (1).

14. Chat server (3) according to one of the claims 12 or 13, **characterised in that** the said command module (32) is set up such that the said communication participants are able to select a communication forum from the said table (33) or define a new communication forum, a designation being assigned to a defined communication forum, designating for example a topic.

15. Chat server (3) according to claim 14, **characterised in that** the said command module (32) is set up such that it is able to prepare a list of the defined communication forums stored in the said table (33) and transmit it by means of the said communications module (31) to the said communications terminals (11, 12, 21) over the said telecommunications networks (1, 2).

16. Chat server (3) according to one of the claims 12 to 15, **characterised in that** at least certain of the entries relating to communication forums stored in the said table (33) are limited geographically and contain indications about a geographic area, and the said command module (32) is set up such that it makes available geographically limited communication forums only to communication participants who are located in this geographic area.

17. Chat server (3) according to one of the claims 14 to 16, **characterised in that** at least certain of the entries relating to communication forums stored in the said table (33) contain indications about a first communication participant who has defined the respective communication forum, and the said command module (32) is set up such that it is able to pass on commands from a second communication participant regarding the selection of one of the said communication forums to the first communication participant and is able to receive a command from this first communication participant to deny the second communication participant access to the respective communication forum.

18. Chat server (3) according to one of the claims 12 to 17, **characterised in that** the said communications module (31) is set up such that it is able to interconnect communications terminals (11, 12, 21) for one of the said communication rounds by means of conference circuit.

19. Chat server (3) according to one of the claims 12 to 18, **characterised in that** at least certain of the entries relating to communication forums stored in the said table (33) contain indications about communication participants who have registered for a communication forum when no other communication participant has yet selected the respective communication forum, and the said command module (32) is set up such that it is able to connect a communication round between the communication participant who has registered and at least one other communication participant when this at least one other communication participant has selected the respective communication forum.

20. Chat server (3) according to one of the claims 12 to 19, **characterised in that** at least certain of the entries relating to communication forums stored in the said table (33) contain indications about first communication participants, who have registered for a communication forum, and about second communication participants, who have been specified as communication partners by the first communication participants, and the said command module (32) is set up such that it informs a registered first communication participant when a specified communication partner has selected a respective communication forum.

21. Chat server (3) according to one of the claims 12 to 20, **characterised in that** at least certain of the entries relating to communication forums stored in the said table (33) contain indications relating to a temporally limited availability.

## Revendications

1. Procédé de communication dans lequel au moins deux correspondants communiquent au moyen de terminaux de communication (11, 12, 21) par un réseau de télécommunication (1, 2) dans un forum de communication par voie orale, lesdits terminaux de communication (11, 12, 21) étant interconnectés par ledit réseau de télécommunication (1, 2) pour une dite session de communication quand lesdits correspondants ont choisi un forum commun de communication, **caractérisé en ce que**
lesdits correspondants choisissent le forum commun de communication au moyens desdits terminaux de communication (11, 12, 21).

2. Procédé de communication selon la revendication 1, **caractérisé en ce qu'**au moins certains desdits terminaux de communication sont des périphériques mobiles (11, 12) et **en ce que** ledit réseau de télécommunication comprend au moins un réseau mobile (1).

3. Procédé de communication selon l'une des revendications 1 ou 2, **caractérisé en ce que** lesdits correspondants choisissent par une structure de menu un forum de communication à partir d'une liste de forums de communication définis ou définissent un nouveau forum, une désignation étant associée à un forum défini de communication laquelle indique par exemple un salon thématique de discussion.

4. Procédé de communication selon la revendication 3, **caractérisé en ce que** ladite structure de menu est affichée sur un affichage (111, 211) desdits terminaux de communication (11, 12, 21) et **en ce que** ledit forum de communication est sélectionné ou défini au moyen d'élément de commande (112, 212) desdits terminaux de communication (11, 12, 21).

5. Procédé de communication selon la revendication 3, **caractérisé en ce que** ledit forum de communication peut être sélectionné ou défini par guidage de menu à commande vocale au moyen des éléments de commande (112, 212) desdits terminaux de communication (11, 12, 21).

6. Procédé de communication selon l'une des revendications 1 à 5, **caractérisé en ce qu'**au moins certains desdits forums de communication ne sont disponibles que pour des correspondants qui se trouvent dans une région géographique définie attribuée au forum de communication concerné.

7. Procédé de communication selon l'une des revendications 3 à 6, **caractérisé en ce que** l'accès à un dit forum de communication peut être interdit à un correspondant intéressé par ledit correspondant qui a défini le forum de communication.

8. Procédé de communication selon l'une des revendications 1 à 7, **caractérisé en ce que** lesdits terminaux de communication (11, 12, 21) sont interconnectés pour une dite session de communication au moyen du branchement multiplex ou mode conférence.

9. Procédé de communication selon l'une des revendications 1 à 8, **caractérisé en ce que** l'un des correspondants s'inscrit pour au moins un forum de communication quand aucun autre correspondant n'a pas encore sélectionné le forum de communication considéré et **en ce qu'**une session de communication débute entre le correspondant inscrit et au moins un autre correspondant si au moins cet autre correspondant a sélectionné le forum de communication considéré.

10. Procédé de communication selon l'une des revendications 1 à 9, **caractérisé en ce que** l'un des correspondants s'inscrit pour un forum de communication, auquel cas il spécifie en outre au moins un autre correspondant en tant qu'interlocuteur pour le forum de communication considéré de sorte qu'il est informé dés qu'un interlocuteur spécifié a sélectionné un forum de communication concerné.

11. Procédé de communication selon l'une des revendications 1 à 10, **caractérisé en ce qu'**au moins certains desdits forums de communication présentent une disponibilité limitée dans le temps.

12. Serveur chat (3) qui comprend un module de communication (31) pour la liaison à des réseaux de télécommunication (1, 2) dans lesquels des correspondants communiquent entre eux à l'aide de terminaux de communication (11, 12, 21), serveur qui dispose d'un tableau (33) dans lequel sont stockées des informations relatives à des forums de communication et qui comprend un module d'instruction (32) qui est configuré pour pouvoir recevoir et exécuter des instructions provenant desdits correspondants, ledit module d'instruction (32) permettant auxdits correspondants de sélectionner au moyens desdites instructions l'un desdits forums de communication, ledit module de communication (31) étant configuré de manière à pouvoir interconnecter par l'intermédiaire d'un dit réseau de télécommunication (1, 2) deux desdits correspondants qui ont sélectionné un forum de communication commun, pour une session de communication dans laquelle lesdits correspondants communiquent par la voix, **caractérisé en ce que** le module d'instruction (32) est en outre configuré de manière à recevoir par le biais desdits réseaux de télécommunication (1, 2) desdites instructions saisies par lesdits correspondants au moyen desdits terminaux de communication (11, 12, 21).

13. Serveur chat (3) selon la revendication 12, **caractérisé en ce qu'**au moins certains desdits terminaux de communication sont des périphériques mobiles (11, 12) et **en ce que** lesdits réseaux de communications comprennent au moins un réseau mobile (1, 2).

14. Serveur chat (3) selon l'une des revendications 12 ou 13, **caractérisé en ce que** ledit module d'instruction (32) est configuré de sorte que lesdits correspondants peuvent choisir un forum de communication d'après ledit tableau (33) ou définir un nouveau forum de communication, une désignation étant attribuée au forum de communication défini, laquelle indique par exemple un salon thématique.

15. Serveur chat (3) selon la revendication 14, **caractérisé en ce que** ledit module d'instruction (32) est configuré de sorte qu'il peut établir une liste des forums de communication définis mémorisés audit tableau (33) et peut la transmettre à l'aide dudit module de communication (31) par lesdits réseaux de communication (1, 2) auxdits terminaux de communication (11, 12, 21).

16. Serveur chat (3) selon l'une des revendications 12 à 15, **caractérisé en ce qu'**au moins certaines des entrées relatives aux forums de communication mémorisés au tableau (33) sont géographiquement limitées et comprennent des indications sur une zone géographique et **en ce que** ledit module d'instruction (32) est paramétré de manière à ne mettre à disposition les forums de communication limités géographiquement que pour des correspondants qui se trouvent dans cette zone géographique.

17. Serveur chat (3) selon l'une des revendications 14 à 16, **caractérisé en ce qu'**au moins certaines des entrées relatives aux forums de communication et mémorisées au tableau (33) comprennent des données sur un premier correspondant qui a défini le forum de communication considéré et **en ce que** ledit module d'instruction (32) est configuré de manière à pouvoir transmettre des instructions provenant d'un second correspondant et concernant le choix d'un desdits forums de communication au premier correspondant et recevoir de ce premier correspondant une instruction pour interdire au second correspondant l'accès au forum de communication considéré.

18. Serveur chat (3) selon l'une des revendications 12 à 17, **caractérisé en ce que** ledit module de communication (31) est configuré de manière à pouvoir interconnecter des terminaux de communications (11, 12, 21) pour l'une desdites sessions de communication par le biais du mode conférence ou branchement multiplex.

19. Serveur chat (3) selon l'une des revendications 12 à 18, **caractérisé en ce qu'**au moins certaines des entrées saisies audit tableau (33) concernant des forums de communication comprennent des données sur des correspondants qui se sont inscrits à un forum de communication si aucun autre correspondant n'a pas encore sélectionné le forum de communication concerné et **en ce que** le module d'instruction (32) est configuré de sorte qu'il peut interconnecter le correspondant inscrit et au moins un autre correspondant dans une session de communication si au moins cet autre correspondant a choisi le forum de communication considéré.

20. Serveur chat (3) selon l'une des revendications 12 à 19, **caractérisé en ce qu'**au moins certaines des entrées saisies audit tableau (33) concernant des forums de communication comprennent des données sur des premiers correspondants qui se sont inscrits pour un forum de communication et sur des seconds correspondants qui ont été spécifiés par le premier correspondant en tant qu'interlocuteur et **en ce que** le module d'instruction (32) est configuré de manière à informer un premier correspondant inscrit si un interlocuteur spécifié a choisi un forum de communication considéré.

21. Serveur chat (3) selon l'une des revendications 12 à 20, **caractérisé en ce qu'**au moins certaines des entrées saisies audit tableau (33) concernant des forums de communication comprennent des données relatives à une disponibilité limitée dans le temps.
